# EUROPÄISCHE PATENTSCHRIFT

(11) **EP 1 224 053 B1**
(45) Veröffentlichungstag und Bekanntmachung des Hinweises auf die Patenterteilung: **30.03.2005**
(21) Anmeldenummer: 00977435.7
(22) Anmeldetag: 27.10.2000
(51) Int. Cl.: B23K 26/06, B23K 26/14, C03B 33/09

(54) **VERFAHREN UND VORRICHTUNG ZUM SCHNELLEN SCHNEIDEN EINES WERKSTÜCKS AUS SPRÖDBRÜCHIGEM WERKSTOFF**
METHOD AND DEVICE FOR RAPID CUTTING OF A WORKPIECE FROM A BRITTLE MATERIAL
PROCEDE ET DISPOSITIF PERMETTANT LA COUPE RAPIDE D'UNE PIECE A USINER CONSTITUEE DE MATERIAU CASSANT

(30) Priorität: 29.10.1999 DE 19952331
(43) Veröffentlichungstag der Anmeldung: 24.07.2002
(73) Patentinhaber: Schott AG, 55122 Mainz (DE)
(72) Erfinder: HOETZEL, Bernd, 55286 Wörrstadt (DE)
(86) Internationale Anmeldenummer: PCT/EP2000/010577
(87) Internationale Veröffentlichungsnummer: WO 2001/032349

(56) Entgegenhaltungen:
- EP-A- 0 872 303
- WO-A-93/20015
- DE-A- 4 305 107
- DE-A- 4 411 037
- GB-A- 1 433 563
- US-A- 3 453 097

## Beschreibung

Die Erfindung bezieht sich auf ein Verfahren und eine Vorrichtung zum schnellen Schneiden eines Werkstücks aus sprödbrüchigem Werkstoff, insbesondere aus Glas, Glaskeramik oder Keramik, mittels Laserstrahlen entlang einer Schneidlinie beliebiger Kontur. Eine bevorzugte Anwendung ist dabei das schnelle Schneiden von Flachglas.

Konventionelle Trennverfahren für Glas basieren darauf, mittels eines Diamanten oder eines Schneidrädchens zunächst eine Ritzspur im Glas zu generieren, um das Glas anschließend durch eine äußere mechanische Kraft entlang der so erzeugten Schwachstelle zu brechen. Nachteilig ist bei diesen Verfahren, daß durch die Ritzspur Partikel (Splitter) aus der Oberfläche gelöst werden, die sich auf dem Glas ablagern können und dort beispielsweise zu Kratzern führen können. Ebenfalls können sogenannte Ausmuschelungen an der Schnittkante entstehen, die zu einem unebenen Glasrand führen. Weiterhin führen die beim Ritzen entstehenden Mikrorisse in der Schnittkante zu einer verringerten mechanischen Beanspruchbarkeit, d. h. zu einer erhöhten Bruchgefahr.

Ein Ansatz, sowohl Splitter als auch Ausmuschelungen und Mikrorisse zu vermeiden, besteht im Trennen von Glas auf der Basis thermisch generierter Spannung. Hierbei wird eine Wärmequelle, die auf das Glas gerichtet ist, mit fester Geschwindigkeit relativ zu dem Glas bewegt und so eine derart hohe thermische Spannung erzeugt, daß das Glas Risse bildet. Der notwendigen Eigenschaft der Wärmequelle, die thermische Energie lokal, d. h. mit einer Genauigkeit besser als einen Millimeter, was den typischen Schnittgenauigkeiten entspricht, positionieren zu können, genügen Infrarotstrahler, spezielle Gasbrenner und insbesondere Laser. Laser haben sich wegen ihrer guten Fokussierbarkeit, guten Steuerbarkeit der Leistung sowie der Möglichkeit der Strahlformung und damit der Intensitätsverteilung auf Glas bewährt und durchgesetzt.

Dieses Laserstrahl-Schneidverfahren, das durch eine lokale Erwärmung durch den fokussierten Laserstrahl in Verbindung mit einer Kühlung von außen eine thermomechanische Spannung bis über die Bruchfestigkeit des Werkstoffes induziert, ist durch mehrere Schriften bekannt geworden.

Das aus der WO 93/20015 bekannte Verfahren nutzt einen Laserstrahl mit elliptischer Form, mit einem nachlaufenden Kühlspot. Dieses Verfahren zeigt gute Ergebnisse beim gradlinigen Ritzen von nichtmetallischem Plattenmaterial, kann jedoch kein hochwertiges und hochpräzises Ritzen entlang einer gekrümmten Kontur sichern. Zudem weist das genannte Verfahren eine geringe Stabilität des Schneidablaufs bei einer hohen Strahlungsdichte und hohen Schnittgeschwindigkeiten auf.

Um die Erhitzungsbedingungen des Materials entlang der Schnittlinie zu optimieren, erfolgt das Erhitzen gemäß der WO 96/20062 mittels eines Wärmestrahlbündels, in dessen Querschnitt, der durch das Zentrum des Bündels verläuft, sich die Dichte der Strahlungsleistung abnehmend von der Peripherie zum Zentrum hin verteilt. Es wird ein elliptisches Strahlenbündel verwendet, das eine Temperaturverteilung in Form eines elliptischen Ringes bewirkt.

Die Nachteile dieser bekannten Verfahren werden durch das Verfahren nach der EP 0 872 303 A 2 vermieden, das einen Brennfleck mit einer sich in Schneidrichtung öffnenden U- bzw. V-förmigen Kontur und einer charakteristischen Intensitätsverteilung vorsieht. Dieses Verfahren hat sich in der Praxis bei der Ausführung von geraden Schnitten gut bewährt. Es ist möglich, auch große Werkstückdicken sauber zu durchtrennen. Bei der Ausführung von Freiformschnitten, d.h. von Schnitten mit beliebiger, auch gekrümmter Kontur, muss eine der Kontur der Schneidlinie angepaßte, gekrümmte U- bzw. V-förmige Intensitätsverteilung erzeugt und der Kontur samt der nachfolgenden Kühlung nachgefahren werden. Dies erfordert insbesondere eine Kopplung der den Brennfleck erzeugenden Scannereinrichtung mit einer Bahnsteuerung, was einen nicht unerheblichen Steuerungs- und Justageaufwand mit sich bringt.

Durch die DE 44 11 037 C 2 ist ein Laserstrahl-Schneidverfahren zum Schneiden von Hohlgläsern bekannt geworden, das mit einem scharf zu einem Spot gebündelten, ortsfesten Laserstrahl arbeitet, der rund um das sich drehende Hohlglas eine thermische Spannungszone erzeugt. Danach wird entlang der eingebrachten Spannungszone über den gesamten Umfang des Hohlglases mit einem aus einer Düse ausgeblasenen Sprühwassemebel gekühlt und so in Verbindung mit einem mechanisch oder thermisch erzeugten Startriß ein Abtrennen des Hohlglasrandes erzielt.

Durch die DE 43 05 107 A 1 ist ein Laserstrahl-Schneidverfahren bekannt geworden, bei dem der Laserstrahl so geformt ist, dass sein Strahlquerschnitt auf der Oberfläche des Werkstückes eine längliche Form aufweist, bei dem das Verhältnis von Länge und Breite des auftreffenden Strahlquerschnittes mittels einer Blende im Laserstrahlengang einstellbar ist.

Weiterhin bekannt sind Verfahren zum Schneiden von Glas mittels mehrerer Laserstrahlen.

Die, GB-PS 1,433,463, beschreibt ein Verfahren, bei dem mit zwei Laserstrahlen gearbeitet wird, wobei der erste Laserstrahl mit niedriger Energie zum Vorwärmen und der zweite Laserstrahl mit hoher Energie zum eigentlichen Schneiden, mittels Aufschmelzen des Glases, verwendet wird.

Bei dem in der DE-AS 1 244 346 beschriebenen Verfahren, kommt u. a. zur Erzeugung von Fassonkanten während des Laserschneidens mehr als ein Laserstrahl am gleichen Schnitt zur Anwendung und die einzelnen Laserstrahlen bilden verschiedene Winkel mit der Glasfläche. Das entsprechende US-Patent 3,453,097 beschreibt ein Verfahren zum Schneiden von Glas mittels mehrerer gekoppelt auf die Schneidlinie geführten Laserstrahlen.

Das erstgenannte Laserstrahl-Schneidverfahren hat sich aus den verschiedensten Gründen als das überlegenere Verfahren erwiesen und in der Praxis durchgesetzt. Von ihm geht auch die Erfindung aus. Die durch das erstgenannte Verfahren erzielbare Schneidfähigkeit und die Einsatzfähigkeit des Verfahrens werden insbesondere durch die effektive Induzierung einer thermomechanischen Spannung entlang der Schneidlinie in das zu schneidende Werkstück, die Intensitätsverteilung im Laserstrahl und die Art der Kühlung bedingt. Die beim Schneiden erforderliche schnelle und gleichzeitig effektive Induzierung einer thermomechanischen Spannung entlang der Schneidlinie wird bei den bekannten Verfahren nur unzureichend gewährleistet. Aufgrund der ineffektiven Induzierung einer thermomechanischen Spannung sind der Forderung nach immer höheren Schnittgeschwindigkeiten Grenzen gesetzt.

Aufgabe der vorliegenden Erfindung ist es, ein Verfahren und eine Vorrichtung zum Schneiden eines Werkstücks aus sprödbrüchigern Werkstoff, insbesondere aus Glas, Glaskeramik oder Keramik, mittels Laserstrahlen entlang einer vorgegebenen Schneidlinie beliebiger Kontur bereitzustellen, so dass ohne ein Auftreten von Mikrorissen, Ausmuschelungen oder Splittern, eine hohe Schnittgenauigkeit und Konturtreue sowie ein schnelles Schneiden ermöglicht wird.

Diese Aufgabe wird mit einem Verfahren gemäß Patentanspruch 1 gelöst.

Gemäß den Maßnahmen nach Anspruch 1 erfolgt das schnelle Schneiden eines Werkstücks aus sprödbrüchigem Werkstoff mittels Laserstrahlen entlang einer vorgegebenen Schneidlinie beliebiger Kontur, mit den Schritten:
- Erzeugen von Laserstrahlen,
- gekoppeltes Führen der Laserstrahlen fokussiert auf die Schneidlinie, ohne Aufschmelzen des Werkstoffs,
- Formen des jeweiligen Laserstrahls derart, dass der jeweilige auf die Oberfläche des zu schneidenden Werkstücks als Brennfleck einwirkende Strahlquerschnitt vorbestimmter Form und Intensitätsverteilung entspricht,
- Erzeugen einer Relativbewegung zwischen den Laserstrahlen und dem Werkstück entlang der Schneidlinie, mit Induzierung einer thermomechanischen Spannung, wobei
die gekoppelt geführten Laserstrahlen hintereinanderliegend auf die Schneidlinie geführt werden oder die gekoppelt geführten Laserstrahlen ganz oder teilweise überlagert auf die Schneidlinie geführt werden und so eine hohe Laserleistung in das zu schneidende Werkstück eingebracht wird, ohne dass das Werkstück aufschmilzt. Anschließend wird ein fluides Kühlmediums auggebracht zur anschließenden Kühlung des erwärmten Schneidlinienabschnitts unter Erhöhung der thermomechanischen Spannung bis über die Bruchfestigkeit des Werkstoffs.

Es werden saubere Trennkanten erzielt, die weder Mikrorisse noch Ausmuschelungen oder Splitter enthalten.

Das erfindungsgemäße Verfahren erlaubt die schnelle und effektive Induzierung einer thermomechanischen Spannung entlang einer Schneidlinie beliebiger Kontur. Überraschenderweise hat sich dabei gezeigt, dass hohe Laserleistungen in das zu schneidende Werkstück eingebracht werden können, ohne dass das Werkstück aufschmilzt. Gleichzeitig konnte die Schneidgeschwindigkeit gegenüber bisherigen Verfahren um bis zu 100 % gesteigert werden.

So können ohne weiteres Schneidgeschwindigkeiten von bis zu 200 m/min erreicht werden.

Insbesondere um hohe Laserteistungen in das Werkstück einzubringen, ohne es gleichzeitig aufzuschmelzen, ist es vorteilhaft, daß die gekoppelt und insbesondere parallel geführten Laserstrahlen hintereinanderliegend auf die Schneidlinie geführt werden. Dabei ist es mögtich, daß die Laserstrahlen kurz hintereinander geführt werden oder aber, dass die Laserstrahlen ganz oder teilweise überlagert auf die Schneidlinie geführt werden.

Die jeweiligen Laserstrahlen werden dabei bevorzugt derart geformt, dass die auf die Oberfläche des zu schneidenden Werkstücks als Brennflecken einwirkenden Strahlquerschnitte jeweils gleicher Form und gleicher Intensivitätsverteilung entsprechen.

Die Laserstrahlen werden weiterhin bevorzugt parallel zueinander senkrecht oder zumindest in gleichem Winkel zur Werkstückoberfläche auf die Schneidlinie geführt.

Beim Schneiden von Glas ist dabei besonders darauf zu achten, dass die Transformationstemperatur T_{G} des jeweiligen Glases nicht überschritten wird.

Wird am Anfang der Schneidlinie ein Mikroriß aufgebracht, so folgt der Riß sehr präzise der Schneidlinie.

Vorzugsweise sind die jeweiligen Laserstrahlen Strahlen eines oder mehrerer CO- oder CO₂-Laser, wobei die Wellenlänge des Lasers besonders bevorzugt abstimmbar ist und so dem jeweiligen Absorptionsmaximum des zu schneidenden Werkstoffs angepaßt werden kann. Je besser die Laserwellenlänge dem Absorptionsmaximum des zu schneidenden Werkstoffs angepaßt werden kann, desto effektiver ist die Induzierung einer thermomechanischen Spannung und desto höher kann ebenfalls die Schneidgeschwindigkeit gewählt werden.

Das fluide Kühlmedium wird bevorzugt von oben nach unten auf das Werkstück aufgeblasen.

Bevorzugte fluide Kühlmedien sind Kühlgase, vorzugsweise kalte Luft, oder ein Luft-Wasser-Gemisch.

In einer bevorzugten Ausführung der Erfindung wird die Temperatur des fluiden Kühlmediums einstellt und geregelt. Besonders bevorzugt wird dabei das fluide Kühlmedium zusätzlich gekühlt. Dies kann beispielsweise mittels wenigstens eines Peltier-Elements erfolgen. Dadurch wird eine reproduzierbare Prozeßführung unter regel- und kontrollierbaren Bedingungen ermöglicht.

In einer weiteren Ausgestaltung der Erfindung wird der Gasstrahl durch eine oder mehrere konzentrische und/oder elliptische Düsen geformt.

Es können alle Gasstrahlformen und Düsenanordnungen verwendet werden, die eine effektive Kühlung ermöglichen.

Prinzipiell können alle vorbestimmten Laserstrahl-Formen und damit verbundenen Intensitätsverteilungen auf das zu schneidende Werkstück verwendet werden.

Besonders bevorzugt wird eine in der EP 0 872 303 A2 beschriebene U- bzw. V-förmige Kontur des Laserstrahles und die damit verbundene Intensitätsverteilung.

Darüber hinaus eignet sich der CO- oder CO₂-Laser, wie auch jeder andere Laser, der vom Material genügend stark absorbiert wird, zum abschließenden Verschmelzen und Verrunden der scharfkantig gebrochenen Kante.

Das erfindungsgemäße Verfahren eignet sich besonders zum Schneiden von sprödbrüchigen Werkstoffen aus Glas, Glaskeramik oder Keramik, wobei auch relativ dicke Werkstoffe, beispielsweise Flachglas mit einer Dicke von 30 mm vorteilhaft geschnitten werden kann.

Das erfindungsgemäße Verfahren eignet sich besonders zum Schneiden von Flachglas-Werkstücken beliebiger Kontur, insbesondere zum Schneiden von kreisförmigen oder kreisringförmigen Scheiben. Solche kreisringförmigen Glasscheiben werden vorzugsweise als Substratglas für magnetische und optische Speichermedien verwendet.

Hinsichtlich der Vorrichtung zum schnellen Schneiden eines Werkstücks aus sprödbrüchigem Werkstoff mittels Laserstrahlen entlang einer vorgegebenen Schneidlinie beliebiger Kontur, sind vorgesehen:
- einer oder mehreren Laserquellen zur Erzeugung von Laserstrahlen,
- optischen Mitteln zum gekoppelten Führen der Laserstrahlen fokussiert auf die Schneidlinie, ohne Aufschmelzen des Werkstoffs,
- Mitteln zum Formen des jeweiligen Laserstrahls derart, daß der jeweilige auf die Oberfläche des zu schneidenden Werkstücks als Brennfleck einwirkende Strahlquerschnitt vorbestimmter Form und Intensitätsverteilung entspricht,
- einer Antriebsanordnung zum Erzeugen einer Relativbewegung zwischen den Laserstrahlen und dem Werkstück entlang der Schneidlinie mit Induzierung einer thermomechanischen Spannung,
- die optischen Mittel zum gekoppelten Führen der Laserstrahlen erlauben ein gekoppeltes Führen der Laserstrahlen fokussiert und kurz hintereinanderliegend auf die Schneidlinie oder die optischen Mittel zum gekoppelten Führen der Laserstrahlen erlauben ein gekoppeltes Führen der Laserstrahlen fokussiert und ganz oder teilweise überlagert auf die Schneidlinie um so eine hohe Laserleistung in das zu schneidende Werkstück einzubringen, ohne dass das Werkstück aufschmilzt, und
- Mittel zum Aufblasen eines fluiden Kühlmediums zur anschließenden Kühlung des erwärmten Schneidlinienabschnitts unter Erhöhung der thermomechanischen Spannung bis über die Bruchfestigkeit des Werkstoffes.

Dabei ist es möglich, dass die optischen Mittel zum gekoppelten Führen der Laserstrahlen ein gekoppeltes Führen der Laserstrahlen derart erlauben, dass die Laserstrahlen fokussiert und voneinander getrennt oder aber ganz oder teilweise überlagert auf die Schneidlinie geführt sind.

Weiterhin sind bevorzugt Mittel zum Aufbringen eines Mikrorisses am Anfang der Schneidlinie vorgesehen.

Vorzugsweise ist der Laser ein CO₂-Laser, dessen Wellenlänge dem spektralen Absorptionsmaximum des zu schneidenden Werkstoffes entspricht. Dieser CO₂-Laser emittiert Licht im fernen infraroten Bereich bei einer Wellenlänge von 10,6 µm. Diese Wärmestrahlung zeigt erhebliche Besonderheiten bei der Wirkung auf Materie. So wird sie von den meisten im sichtbaren Licht transparenten Materialien stark absorbiert.

Der Umstand der starken Absorption in Glas wird verwendet, um Glas zu schneiden. Bei einem Absorptionskoeffizienten von 10³ cm⁻¹ wird 95 % der Leistung in einer 30 µm dicken Schicht absorbiert.

Sollen Werkstoffe, deren Absorptionsmaxima bei einer Wellenlänge von etwa 5 µm liegen, geschnitten werden, so bietet sich die Verwendung eines CO-Lasers als Laserquelle an.

Prinzipiell können alle vorbestimmten Mittel zum Erzeugen, Formen und Führen eines Laserstrahls verwendet werden, die zur Induzierung einer thermomechanischen Spannung, unterhalb der Schmelztemperatur des zu schneidenden Werkstücks geeignet sind.

Nach einer weiteren Ausführungsform ist der Gasstrahl zum Freiblasen des Oberflächenteils des Werkstücks, auf den der Laserstrahl auftritt, ein Luftstrahl.

Beispielhafte Ausführungsformen der Erfindung werden nachfolgend näher erläutert.

Es werden zum schnellen Schneiden eines Werkstücks aus sprödbrüchigem Werkstoff mittels Laserstrahlen entlang einer vorgegebenen Schneidlinie beliebiger Kontur jeweils drei Laserstrahlen erzeugt, die gekoppelt geführt auf die Schneidlinie fokussiert werden, ohne Aufschmelzen des Werkstoffs. Die Laserstrahlen werden dabei bevorzugt senkrecht zur Werkstoffoberfläche geführt. Die Laserstrahlen werden derart geformt, dass der jeweilige auf die Oberfläche des zu schneidenden Werkstücks als Brennfleck einwirkende Strahlenquerschnitt vorbestimmter Form und Intensitätsverteilung entspricht. Der jeweilige Strahlenquerschnitt besitzt eine V-förmige Kontur und die damit verbundene Intensitätsverteilung. Der jeweils als Brennfleck einwirkende Strahlenquerschnitt weist hingegen eine linienförmige Kontur auf.

Durch Erzeugung einer Relativbewegung zwischen den drei gekoppelten Laserstrahlen und dem Werkstück entlang der Schneidlinie wird eine thermomechanische Spannung in das Werkstück induziert. Dabei ist es wesentlich, dass die parallelen gekoppelten Laserstrahlen so exakt wie möglich der vorgegebenen Schneidlinie folgen. Den Laserstrahlen folgend wird durch Aufblasen eines fluiden Kühlmediums zur anschließenden Kühlung (Kühlfleck) des erwärmten Schneidlinienabschnitts die thermomechanische Spannung bis über die Bruchfestigkeit des Werkstoffs erhöht.

Die drei parallelen Laserstrahlen werden dabei gleichzeitig bevorzugt hintereinanderliegend auf die Schneidlinie geführt.

## Patentansprüche

1. Verfahren zum schnellen Schneiden eines Werkstücks aus sprödbrüchigem Werkstoff mittels Laserstrahlen entlang einer vorgegebenen Schneidlinie beliebiger Kontur, mit den Schritten:
- Erzeugen von Laserstrahlen,
- gekoppeltes Führen der Laserstrahlen fokussiert auf die Schneidlinie, ohne Aufschmelzen des Werkstoffs,
- Formen des jeweiligen Laserstrahls derart, dass der jeweilige auf die Oberfläche des zu schneidenden Werkstücks als Brennfleck einwirkende Strahlquerschnitt vorbestimmter Form und Intensitätsverteilung entspricht,
- Erzeugen einer Relativbewegung zwischen den' Laserstrahlen und dem Werkstück entlang der Schneidlinie, mit Induzierung einer thermomechanischen Spannung,
**dadurch gekennzeichnet,**
**dass** die gekoppelt geführten Laserstrahlen hintereinanderliegend auf die Schneidlinie geführt werden oder, dass die gekoppelt geführten Laserstrahlen ganz oder teilweise überlagert auf die Schneidlinie geführt werden und so eine hohe Laserleistung in das zu schneidende Werkstück eingebracht wird, ohne dass das Werkstück aufschmilzt und anschließendes Aufblasen eines fluiden Kühlmediums zur anschließenden Kühlung des erwärmten Schneidlinienabschnitts unter Erhöhung der thermomechanischen Spannung bis über die Bruchfestigkeit des Werkstoffs.

2. Verfahren nach Anspruch 1,
**dadurch gekennzeichnet,**
**dass** am Anfang der Schneidlinie ein Mikroriss aufgebracht wird.

3. Verfahren nach Anspruch 1 oder 2,
**dadurch gekennzeichnet,**
**dass** als jeweiliger Laserstrahl der Strahl eines CO- oder CO₂-Lasers verwendet wird.

4. Verfahren nach mindestens einem der Ansprüche 1 bis 3,
**dadurch gekennzeichnet,**
**dass** als jeweiliger Laserstrahl der Strahl eines abstimmbaren Lasers verwendet wird.

5. Verfahren nach mindestens einem der Ansprüche 1 bis 4,
**dadurch gekennzeichnet,**
**dass** das fluide Kühlmedium von oben nach unten auf das Werkstück aufgeblasen wird.

6. Verfahren nach mindestens einem der Ansprüche 1 bis 5,
**dadurch gekennzeichnet;**
**dass** durch Aufblasen eines Kühlgases, vorzugsweise von kalter Luft, gekühlt wird.

7. Verfahren nach mindestens einem der Ansprüche 1 bis 6,
**dadurch gekennzeichnet,**
**dass** durch Aufblasen eines Luft-Wasser-Gemisches gekühlt wird.

8. Verfahren nach mindestens einem der Ansprüche 1 bis 7,
**dadurch gekennzeichnet,**
**dass** die Temperatur des fluiden Kühlmediums eingestellt und geregelt wird.

9. Verfahren nach mindestens einem der Ansprüche 1 bis 8,
**dadurch gekennzeichnet,**
**dass** das fluide Kühlmedium gekühlt wird.

10. Verfahren nach mindestens einem der Ansprüche 1 bis 9,
**dadurch gekennzeichnet,**
**dass** das fluide Kühlmedium wenigstens mittels eines Peltier-Elements gekühlt wird.

11. Vorrichtung zum schnellen Schneiden eines Werkstücks aus sprödbrüchigem Werkstoff mittels Laserstrahlen entlang einer vorgegebenen Schneidlinie beliebiger Kontur, mit:
- einer oder mehreren Laserquellen zur Erzeugung von Laserstrahlen,
- optischen Mitteln zum gekoppelten Führen der Laserstrahlen fokussiert auf die Schneidlinie, ohne Aufschmelzen des Werkstoffs,
- Mitteln zum Formen des jeweiligen Laserstrahls derart, daß der jeweilige auf die Oberfläche des zu schneidenden Werkstücks als Brennfleck einwirkende Strahlquerschnitt vorbestimmter Form und Intensitätsverteilung entspricht,
- einer Antriebsanordnung zum Erzeugen einer Relativbewegung zwischen den Laserstrahlen und dem Werkstück entlang der Schneidlinie mit Induzierung einer thermomechanischen Spannung,
**dadurch gekennzeichnet,**
**dass** die optischen Mittel zum gekoppelten Führen der Laserstrahlen ein gekoppeltes Führen der Laserstrahlen fokussiert und kurz hintereinanderliegend auf die Schneidlinie erlauben oder, dass die optischen Mittel zum gekoppelten Führen der Laserstrahlen ein gekoppeltes Führen der Laserstrahlen fokussiert und ganz oder teilweise überlagert auf die Schneidlinie erlauben und so eine hohe Laserleistung in das zu schneidende Werkstück eingebracht werden kann, ohne dass das Werkstück aufschmilzt und dass Mittel zum Aufblasen eines fluiden Kühlmediums zur anschließenden Kühlung des erwärmten Schneidlinienabschnitts unter Erhöhung der thermomechanischen Spannung bis über die Bruchfestigkeit des Werkstoffes vorgesehen sind.

12. Vorrichtung nach Anspruch 11,
**gekennzeichnet durch**
Mittel zum Aufbringen eines Mikrorisses am Anfang der Schneidlinie.

13. Vorrichtung nach Anspruch 11 oder 12,
**dadurch gekennzeichnet,**
**dass** eine oder mehrere Laserquellen CO- oder CO₂-Laser sind.

14. Vorrichtung nach mindestens einem der Ansprüche 11 bis 13,
**dadurch gekennzeichnet,**
**dass** eine oder mehrere Laserquellen abstimmbar sind.

15. Vorrichtung nach mindestens einem der Ansprüche 11 bis 14,
**dadurch gekennzeichnet,**
**dass** die Mittel zum Aufblasen eines fluiden Kühlmediums ein Aufblasen von oben nach unten erlauben.

16. Vorrichtung nach mindestens einem der Ansprüche 11 bis 15,
**dadurch gekennzeichnet,**
**dass** die Mittel zum Aufblasen eines fluiden Kühlmediums ein Aufblasen eines Kühlgases, vorzugsweise ein Aufblasen von kalter Luft, erlauben.

17. Vorrichtung nach mindestens einem der Ansprüche 11 bis 16,
**dadurch gekennzeichnet,**
**dass** die Mittel zum Aufblasen eines fluiden Kühlmediums ein Aufblasen eines Luft-Wasser-Gemisches erlauben.

18. Vorrichtung nach mindestens einem der Ansprüche 11 bis 17,
**dadurch gekennzeichnet,**
**dass** die Temperatur des fluiden Kühlmediums einstell- und regelbar ist.

19. Vorrichtung nach mindestens einem der Ansprüche 11 bis 18,
**gekennzeichnet durch**
Mittel zum Kühlen des fluiden Kühlmediums.

20. Vorrichtung nach Anspruch 19,
**dadurch gekennzeichnet,**
**dass** die Mittel zum Kühlen des fluiden Kühlmediums wenigstens ein Peltier-Element enthalten.

## Claims

1. Method for the rapid cutting of a workpiece made from brittle material by means of laser beams along a predetermined cutting line of any desired contour, comprising the following steps:
- generation of laser beams,
- coupled guidance of the laser beams focussed onto the cutting line, without melting the material,
- shaping the respective laser beam in such a manner that the respective beam cross section acting as a focal spot on the surface of the workpiece which is to be cut corresponds to a predetermined shape and intensity distribution,
- generation of a relative movement between the laser beams and the workpiece along the cutting line, with a thermomechanical stress being induced,
**characterized in that**
the laser beams which are provided with coupled guidance are guided onto the cutting line one behind the other or **in that** the laser beams which are provided with coupled guidance are guided in completely or partially superimposed form onto the cutting line, and in this way a high laser power is introduced into the workpiece that is to be cut without the workpiece melting, and then blowing on a fluid cooling medium for subsequent cooling of the heated cutting-line section, so as to increase the thermomechanical stress to above the breaking strength of the material.

2. Method according to Claim 1, **characterized in that** a microcrack is formed at the start of the cutting line.

3. Method according to Claim 1 or 2, **characterized in that** the beam of a CO or CO₂ laser is used as the respective laser beam.

4. Method according to at least one of Claims 1 to 3, **characterized in that** the beam of a tunable laser is used as the respective laser beam.

5. Method according to at least one of Claims 1 to 4, **characterized in that** the fluid cooling medium is blown onto the workpiece from the top downwards.

6. Method according to at least one of Claims 1 to 5, **characterized in that** cooling is carried out by blowing on a cooling gas, preferably cold air.

7. Method according to at least one of Claims 1 to 6, **characterized in that** cooling is carried out by blowing on an air/water mixture.

8. Method according to at least one of Claims 1 to 7, **characterized in that** the temperature of the fluid cooling medium is set and controlled.

9. Method according to at least one of Claims 1 to 8, **characterized in that** the fluid cooling medium is cooled.

10. Method according to at least one of Claims 1 to 9, **characterized in that** the fluid cooling medium is cooled at least by means of a Peltier element.

11. Device for rapid cutting of a workpiece made from brittle material by means of laser beams along a predetermined cutting line of any desired contour having:
- one or more laser sources for generating laser beams,
- optical means for the coupled guidance of the laser beams focussed onto the cutting line, without melting the material,
- means for shaping the respective laser beam in such a manner that the respective beam cross section acting as a focal spot on the surface of the workpiece to be cut corresponds to a predetermined shape and intensity distribution,
- a drive arrangement for generating a relative movement between the laser beams and the workpiece along the cutting line, with a thermomechanical stress being induced,
**characterized in that**
the optical means for coupled guidance of the laser beams allow coupled guidance of the laser beams onto the cutting line in focussed form and one behind the other or **in that** the optical means for coupled guidance of the laser beams allow coupled guidance of the laser beams onto the cutting line in focussed form and completely or partially superimposed and in this way a high laser power can be introduced into the workpiece that is to be cut without the workpiece melting, and **in that** means for blowing on a fluid cooling medium for subsequent cooling of the heated cutting-line section, so that the thermomechanical stress is increased to above the breaking strength of the material, are provided.

12. Device according to Claim 11, **characterized by** means for making a microcrack at the start of the cutting line.

13. Device according to Claims 11 or 12, **characterized in that** one or more laser sources are CO or CO₂ lasers.

14. Device according to at least one of Claims 11 to 13, **characterized in that** one or more laser sources are tunable.

15. Device according to at least one of Claims 11 to 14, **characterized in that** the means for blowing on a fluid cooling medium allow the medium to be blown on from the top downwards.

16. Device according to at least one of Claims 11 to 15, **characterized in that** the means for blowing on a fluid cooling medium allow a cooling gas, preferably cold air, to be blown on.

17. Device according to at least one of Claims 11 to 16, **characterized in that** the means for blowing on a fluid cooling medium allow an air/water mixture to be blown on.

18. Device according to at least one of Claims 11 to 17, **characterized in that** the temperature of the fluid cooling medium can be set and controlled.

19. Device according to at least one of Claims 11 to 18, **characterized by** means for cooling the fluid cooling medium.

20. Device according to Claim 19, **characterized in that** the means for cooling the fluid cooling medium include at least one Peltier element.

## Revendications

1. Procédé pour la coupe rapide d'une pièce constituée d'une matière cassante au moyen de faisceaux laser le long d'une ligne de coupe prédéterminée de contour quelconque, comportant les étapes visant à :
- produire des faisceaux laser,
- guider de façon couplée les faisceaux laser focalisés sur la ligne de coupe, sans fusion de la matière,
- former le faisceau laser respectif de sorte que la section transversale de faisceau respective agissant sur la surface de la pièce à couper en tant que tache focale corresponde à une forme et une distribution d'intensités prédéterminées,
- engendrer un mouvement relatif entre les faisceaux laser et la pièce le long de la ligne de coupe, avec induction d'une contrainte thermomécanique,
**caractérisé en ce que**,
les faisceaux laser guidés de façon couplée sont guidés les uns derrière les autres sur la ligne de coupe ou **en ce que** les faisceaux laser guidés de façon couplée sont guidés sur la pièce à couper en étant totalement ou partiellement superposés et ainsi une forte puissance laser est introduite dans la pièce à couper sans que la pièce ne fonde, et **en ce qu'**ensuite un milieu de refroidissement fluide est appliqué par soufflage pour alors refroidir le tronçon de la ligne de coupe chauffé tout en augmentant la contrainte thermomécanique jusqu'au-delà de résistance à la rupture de la matière.

2. Procédé selon la revendication 1, **caractérisé en ce qu'**une microfissure est appliquée au début de la ligne de coupe.

3. Procédé selon la revendication 1 ou 2, **caractérisé en ce qu'**on utilise comme faisceau laser respectif le faisceau d'un laser à CO ou à CO₂.

4. Procédé selon au moins l'une quelconque des revendications 1 à 3, **caractérisé en ce que** l'on utilise comme faisceau laser respectif le faisceau d'un laser accordable.

5. Procédé selon au moins l'une quelconque des revendications 1 à 4, **caractérisé en ce que** le milieu de refroidissement fluide est appliqué sur la pièce par soufflage du haut vers le bas.

6. Procédé selon au moins l'une quelconque des revendications 1 à 5, **caractérisé en ce que** l'on refroidit en appliquant par soufflage un gaz de refroidissement, de préférence de l'air froid.

7. Procédé selon au moins l'une quelconque des revendications 1 à 6, **caractérisé en ce que** l'on refroidit en appliquant par soufflage un mélange d'eau et d'air.

8. Procédé selon au moins l'une quelconque des revendications 1 à 7, **caractérisé en ce que** la température du milieu de refroidissement fluide est ajustée et réglée.

9. Procédé selon au moins l'une quelconque des revendications 1 à 8, **caractérisé en ce que** le milieu de refroidissement fluide est refroidi.

10. Procédé selon au moins l'une quelconque des revendications 1 à 9, **caractérisé en ce que** le milieu de refroidissement fluide est refroidi au moins au moyen d'un élément Peltier.

11. Dispositif pour la coupe rapide d'une pièce constituée d'une matière cassante au moyen de faisceaux laser le long d'une ligne de coupe prédéterminée de contour quelconque, comportant:
- une ou plusieurs sources laser pour produire des faisceaux laser,
- des moyens optiques pour guider de façon couplée les faisceaux laser focalisés sur la ligne de coupe, sans fusion de la matière,
- des moyens destinés à former le faisceau respectif de sorte que la section transversale de faisceau respective agissant sur la surface à couper en tant que tache focale corresponde à une forme et une distribution d'intensités prédéterminées,
- une disposition d'entraînement destinée à engendrer un mouvement relatif entre les faisceaux laser et la pièce le long de la ligne de coupe, avec induction d'une contrainte thermomécanique,
**caractérisé en ce que**
les moyens optiques destinés à guider de façon couplée les faisceaux laser permettent un guidage couplé des faisceaux laser focalisés et situés serrés les uns derrière les autres sur la ligne de coupe, ou **en ce que** les moyens optiques destinés à guider de façon couplée les faisceaux laser permettent un guidage couplé des faisceaux laser focalisés et totalement ou partiellement superposés sur la ligne de coupe et ainsi une forte puissance laser est introduite dans la pièce à couper sans que la pièce ne fonde et **en ce qu'**ensuite des moyens d'application d'un milieu de refroidissement fluide par soufflage pour alors refroidir le tronçon de la ligne de coupe chauffé tout en augmentant la contrainte thermomécanique jusqu'au-delà de la résistance à la rupture de la matière.

12. Dispositif selon la revendication 11, **caractérisé par** des moyens d'application d'une microfissure au début de la ligne de coupe.

13. Dispositif selon la revendication 11 ou 12, **caractérisé en ce qu'**une ou plusieurs sources laser sont des lasers à CO ou à CO₂.

14. Dispositif selon au moins l'une quelconque des revendications 11 à 13, **caractérisé en ce qu'**une ou plusieurs sources laser sont accordables.

15. Dispositif selon au moins l'une quelconque des revendications 11 à 14, **caractérisé en ce que** les moyens d'application d'un milieu de refroidissement fluide par soufflage permettent une application par soufflage du haut vers le bas.

16. Dispositif selon au moins l'une quelconque des revendications 11 à 15, **caractérisé en ce que** les moyens d'application d'un milieu de refroidissement fluide par soufflage permettent une application d'un gaz de refroidissement par soufflage, de préférence une application d'air froid par soufflage.

17. Dispositif selon au moins l'une quelconque des revendications 11 à 16, **caractérisé en ce que** les moyens d'application d'un milieu de refroidissement fluide par soufflage permettent une application d'un mélange d'eau et d'air par soufflage.

18. Dispositif selon au moins l'une quelconque des revendications 11 à 17, **caractérisé en ce que** la température du milieu de refroidissement fluide est ajustable et réglable.

19. Dispositif selon au moins l'une quelconque des revendications 11 à 18, **caractérisé par** des moyens pour refroidir le milieu de refroidissement fluide.

20. Dispositif selon la revendication 19, **caractérisé en ce que** les moyens pour refroidir le milieu de refroidissement fluide contiennent au moins un élément Peltier.
